# EUROPEAN PATENT APPLICATION

(11) **EP 4 109 837 A1**
(43) Date of publication of application: **28.12.2022**
(21) Application number: 21180747.4
(22) Date of filing: 22.06.2021
(51) Int. Cl.: H04L 29/06, H04W 12/041

(54) **DEVICE VERIFICATION USING BINARY MESSAGE SERVICE MESSAGES**

(71) Applicant: Nokia Technologies Oy, 02610 Espoo (FI)
(72) Inventor: RAO, Siddharth Prakash, 02610 Espoo (FI)
(74) Representative: Swindell & Pearson Limited

(57) **Abstract**

An electronic device configured for storing contact information associated with a second electronic device, transmitting using the contact information at least one binary message service message comprising at least one identifier associated with the electronic device, receiving at least one binary message service message comprising at least one second identifier associated with the second electronic device and determining at least one shared secret based, at least in part, on the at least one identifier and/or at least one second identifier.

## Description

### TECHNOLOGICAL FIELD

Embodiments of the present disclosure relate to verification. Some relate to device verification using binary message service messages.

### BACKGROUND

A network comprises a plurality of network nodes including terminal nodes and access nodes. Communication between nodes of the network is wireless or wired.

In some circumstances, it may be desirable to modify or enhance security of communications between terminal nodes.

### BRIEF SUMMARY

According to various, but not necessarily all, embodiments there is provided an electronic device comprising means for:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or the at least one second identifier and/or the information based, at least in part, on the at least one identifier and/or the at least one second identifier.

In some examples, the means are configured to perform:
determining, after the at least one binary message service message has been transmitted, if the at least one second identifier and/or information based, at least in part, on the at least one second identifier has been received; and
if it is determined that the at least one second identifier and/or information based, at least in part, on the at least one second identifier has not been received, transmitting at least one further binary message service message using the contact information.

In some examples, the means are configured to perform:
transmitting at least one first acknowledgement to the second electronic device; and
receiving at least one second acknowledgement from the second electronic device, wherein the at least one first acknowledgement and at least one second acknowledgement comprise information for confirming that determination of at least one shared secret can occur.

In some examples, the means are configured to perform:
outputting, to a user of the electronic device, confirmation information of the at least one shared secret to confirm validity of the at least one shared secret; and
determining if the user of the electronic device confirms validity of the at least one shared secret.

In some examples, the confirmation comprises at least part of the at least one shared secret.

In some examples, the means are configured to perform:
establishing subsequent communication using the stored contact information using at least one of the at least one shared secret.

In some examples, the electronic device and/or the second electronic device comprises a vehicle.

In some examples, the means are configured to perform:
receiving at least one activation message from the second electronic device;
determining if the at least one activation message has been sent using at least one of the at least one shared secret; and
if it is determined that the at least one activation message has been sent using at least one of the at least one shared secret, activating the electronic device to allow access to the electronic device.

In some examples, the means are configured to perform:
deleting the contact information; and
in response to deleting the contact information, deleting at least one of the at least one shared secret.

In some examples, the means are configured to perform:
in response to deleting the contact information, transmitting at least one message to the second electronic device to confirm deletion of the contact information.

In some examples, the means comprises
at least one processor; and
at least one memory including computer program code, the at least one memory and computer program code configured to, with the at least one processor, cause the performance of the apparatus.

According to various, but not necessarily all, embodiments there is provided a method comprising:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or the at least one second identifier and/or the information based, at least in part, on the at least one identifier and/or the at least one second identifier.

In some examples, the method comprises:
determining, after the at least one binary message service message has been transmitted, if the at least one second identifier and/or information based, at least in part, on the at least one second identifier has been received; and
if it is determined that the at least one second identifier and/or information based, at least in part, on the at least one second identifier has not been received, transmitting at least one further binary message service message using the contact information.

In some examples, the method comprises:
transmitting at least one first acknowledgement to the second electronic device; and
receiving at least one second acknowledgement from the second electronic device, wherein the at least one first acknowledgement and at least one second acknowledgement comprise information for confirming that determination of at least one shared secret can occur.

In some examples, the method comprises:
outputting, to a user of the electronic device, confirmation information of the at least one shared secret to confirm validity of the at least one shared secret; and
determining if the user of the electronic device confirms validity of the at least one shared secret.

In some examples, the confirmation comprises at least part of the at least one shared secret.

In some examples, the method comprises:
establishing subsequent communication using the stored contact information using at least one of the at least one shared secret.

In some examples, the electronic device and/or the second electronic device comprises a vehicle.

In some examples, the method comprises:
receiving at least one activation message from the second electronic device;
determining if the at least one activation message has been sent using at least one of the at least one shared secret; and
if it is determined that the at least one activation message has been sent using at least one of the at least one shared secret, activating the electronic device to allow access to the electronic device.

In some examples, the method comprises:
deleting the contact information; and
in response to deleting the contact information, deleting at least one of the at least one shared secret.

In some examples, the method comprises:
in response to deleting the contact information, transmitting at least one message to the second electronic device to confirm deletion of the contact information.

According to various, but not necessarily all, embodiments there is provided a computer program comprising instructions for causing an electronic device to perform at least the following:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or the at least one second identifier and/or the information based, at least in part, on the at least one identifier and/or the at least one second identifier.

In some examples, the computer program comprising instructions for causing an electronic device to perform:
determining, after the at least one binary message service message has been transmitted, if the at least one second identifier and/or information based, at least in part, on the at least one second identifier has been received; and
if it is determined that the at least one second identifier and/or information based, at least in part, on the at least one second identifier has not been received, transmitting at least one further binary message service message using the contact information.

In some examples, the computer program comprising instructions for causing an electronic device to perform:
transmitting at least one first acknowledgement to the second electronic device; and
receiving at least one second acknowledgement from the second electronic device, wherein the at least one first acknowledgement and at least one second acknowledgement comprise information for confirming that determination of at least one shared secret can occur.

In some examples, the computer program comprising instructions for causing an electronic device to perform:
outputting, to a user of the electronic device, confirmation information of the at least one shared secret to confirm validity of the at least one shared secret; and
determining if the user of the electronic device confirms validity of the at least one shared secret.

In some examples, the confirmation comprises at least part of the at least one shared secret.

In some examples, the computer program comprising instructions for causing an electronic device to perform:
establishing subsequent communication using the stored contact information using at least one of the at least one shared secret.

In some examples, the electronic device and/or the second electronic device comprises a vehicle.

In some examples, the computer program comprising instructions for causing an electronic device to perform:
receiving at least one activation message from the second electronic device;
determining if the at least one activation message has been sent using at least one of the at least one shared secret; and
if it is determined that the at least one activation message has been sent using at least one of the at least one shared secret, activating the electronic device to allow access to the electronic device.

In some examples, the computer program comprising instructions for causing an electronic device to perform:
deleting the contact information; and
in response to deleting the contact information, deleting at least one of the at least one shared secret.

In some examples, the computer program comprising instructions for causing an electronic device to perform:
in response to deleting the contact information, transmitting at least one message to the second electronic device to confirm deletion of the contact information.

According to various, but not necessarily all, embodiments there is provided an apparatus comprising
at least one processor; and
at least one memory including computer program code;
the at least one memory and the computer program code configured to, with the at least one processor, cause the apparatus at least to perform at least a part of one or more methods disclosed herein.

According to various, but not necessarily all, embodiments there is provided an apparatus comprising means for performing at least part of one or more methods disclosed herein.

According to various, but not necessarily all, embodiments there is provided examples as claimed in the appended claims.

The description of a function and/or action should additionally be considered to also disclose any means suitable for performing that function and/or action.

### BRIEF DESCRIPTION

Some examples will now be described with reference to the accompanying drawings in which:
- FIG. 1: shows an example of the subject matter described herein;
- FIG. 2: shows another example of the subject matter described herein;
- FIG. 3: shows another example of the subject matter described herein;
- FIG. 4: shows another example of the subject matter described herein;
- FIG. 5: shows another example of the subject matter described herein;
- FIG. 6A: shows another example of the subject matter described herein; and
- FIG. 6B: shows another example of the subject matter described herein.

### DETAILED DESCRIPTION

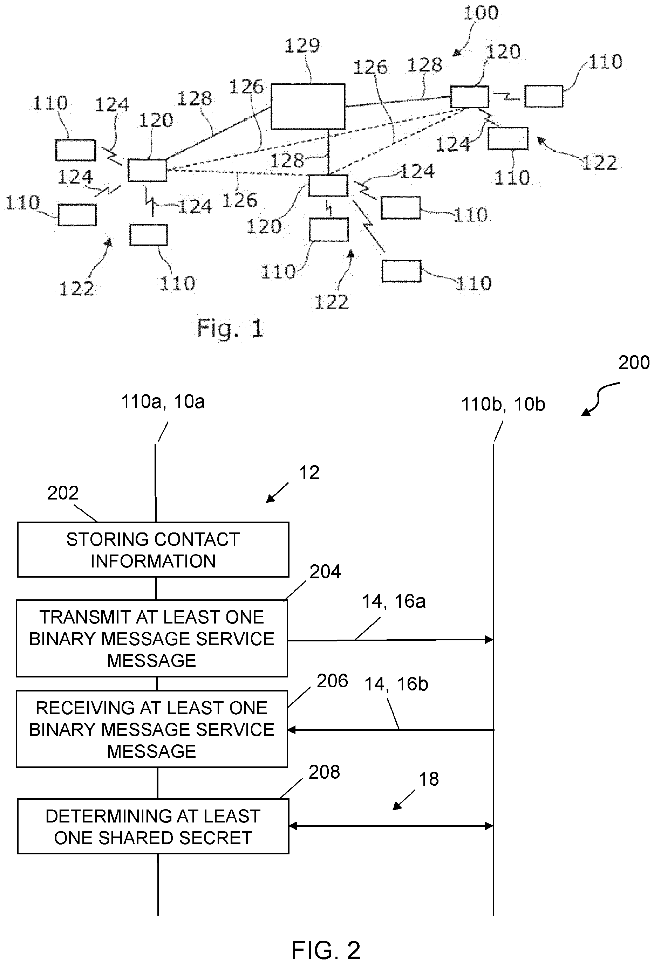

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a wired or wireless network, for example a telecommunications network, in which at least some of the terminal nodes 110 and access nodes 120 communicate with each other, for example using transmission/reception of radio waves/signals and/or wired network signals.

The one or more core nodes 129 may, in some examples, communicate with each other. The one or more access nodes 120 may, in some examples, communicate with each other.

The one or more terminal nodes 110 may, in some examples, communicate with each other.

The network 100 may comprise a cellular network comprising a plurality of cells 122 at least one served by an access node 120. In this example, the interface between the terminal nodes 110 and an access node 120 defining a cell 122 is a wireless interface 124.

In some examples, the access node(s) 120 is a cellular radio transceiver and the terminal nodes 110 are cellular radio transceivers.

In the example illustrated the cellular network 100 is a third generation (3G) Partnership Project (3GPP) network, a fourth generation (4G) Partnership Project (3GPP) network, a fifth generation (5G) Partnership Project (3GPP) network, or any further development of Partnership Project (3GPP) network in which the terminal nodes 110 are user equipment (UE) and the access nodes 120 are base stations (for example, gNBs).

In some examples, the network 100 is a short-range wireless communication network, for example a WLAN (wireless local area network).

Functionality of a base station may be distributed between a central unit (CU), for example a gNB-CU, and one or more distributed units (DU), for example gNB-DUs.

In the particular example illustrated the network 100 is an Evolved Universal Terrestrial Radio Access network (E-UTRAN). The E-UTRAN consists of E-UTRAN NodeBs (eNBs), providing the E-UTRAN user plane and control plane (for example, RRC) protocol terminations towards the UE. The eNBs 120 are interconnected with each other by means of an X2 interface 126. The eNBs are also connected by means of the S1 interface 128 to the Mobility Management Entity (MME) 129.

In other example the network 100 is a Next Generation (or New Radio, NR) Radio Access network (NG-RAN). The NG-RAN consists of gNodeBs (gNBs), providing the user plane and control plane (for example, RRC) protocol terminations towards the UE. The gNBs are interconnected with each other by means of an X2/Xn interface 126. The gNBs are also connected by means of the N2 interface 128 to the Access and Mobility management Function (AMF).

In examples, the network 100 can comprise a combination of E-UTRAN and NG-RAN.

In examples, terminal nodes 110, which can be considered electronic devices 10, can communicate across a network, such as at least a part of the network of FIG. 1. In examples, communications between terminal nodes 110/electronic devices 10 are secured using a shared secret derived based, at least in part, on unique identifiers associated with the terminal nodes 110/electronic devices 10.

In examples, terminal nodes 110 can comprise other type(s) of access nodes, for example Wi-Fi(^{™}) and/or WLAN access points and so on.

In examples, service capabilities exposure function (SCEF) in a 4G network or network exposure function (NEF) in a 5G network can provide application programming interfaces (APIs) to service providers like customers' application servers.

In some examples, NEF can provide better performance, more versatile communications, applications, and/or faster communications in the network, for example.

In examples, devices can connect to service providers, internet and/or other services through and/or in the network 100 and/or one or more other communication networks.

FIG. 2 illustrates an example of a method 200.

In examples, FIG. 2 can be considered to illustrate a plurality of methods. For example, FIG. 2 illustrates one or more actions at a plurality of actors/entities/nodes. In examples, FIG. 2 can be considered to illustrate a plurality of methods performed by the individual actors/entities/nodes.

One or more of the features discussed in relation to FIG. 2 can be found in one or more of the other FIGs. During discussion of FIG. 2, reference will be made to other FIGs for the purposes of explanation.

In the example of FIG. 2, one or more apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, one or more of the apparatuses in FIG. 2 form at least a portion of the network 100 as described in relation to FIG. 1.

In the illustrated example, two terminal nodes 110a, 110b in the form of two electronic devices 10a, 10b, transmit and/or receive one or more signals and/or one or more messages.

In examples, communications and/or transmissions between elements illustrated in FIG. 2 can proceed via any number of intervening elements, including no intervening elements.

In some examples, method 200 and/or parts of method 200 can be considered a method of verification and/or device verification.

In some examples, the method 200 and/or parts of the method 200 can be considered a method of securing and/or verifying communications between terminal nodes and/or electronic devices.

In examples, the terminal node 110a can be considered an electronic device 10a and the terminal node 110b can be considered a second electronic device 10b.

In examples, the electronic device 10a and/or second electronic device 10b can be and/or comprise and suitable electronic device 10.

For example, the electronic device 10a and/or second electronic device 10b can be and/or comprise a mobile terminal, and/or a mobile telephone, and/or a mobile communication device, and/or a laptop, and/or a personal digital assistant, and/or a wearable electronic device, and/or a multimedia device, and/or a desktop computer and/or a vehicle and/or an internet of things (loT) device and/or user equipment (UE) and so on, or any combination thereof.

Accordingly, in some examples, the electronic device 10a and/or the second electronic device 10b comprises a vehicle 24.

Accordingly, in some examples, the electronic device 10a and/or the second electronic device 10b comprises at least one user equipment (UE).

At block 202, the method 200 comprises storing contact information 12 associated with a second electronic device 10b.

In the illustrated example, the location of the blocks indicates the entity performing the action(s). For example, in FIG. 2, block 202 is performed at and/or by terminal node 110a/electronic device 10a.

In examples, contact information/details 12 can be stored in any suitable way.

In some examples, storing the contact information 12 can be considered saving and/or keeping the contact information 12.

In some examples, storing the contact information 12 can be considered storing the contact information 12 for later retrieval and/or use.

In examples, storing the contact information 12 comprises storing the contact information in a memory, such as memory 1134.

In some examples, storing the contact information 12 comprises storing the contact information 12 in at least one data structure.

In some examples, storing the contact information 12 comprises storing the contact information 12 in contact storage and/or phone book storage.

In examples, the contact information 12 can be stored locally and/or remotely relative to the electronic device 10a. For example, the contact information 12 can be stored in a memory that is physically part of the electronic device 10a and/or in a memory that is removable from the electronic device 10a, and/or in a memory that is not physically part of the electronic device 10a but can be accessed by the electronic device 10a.

In some examples, storing the contact information 12 can be considered storing the contact information 12 on the electronic device 10a and/or storing the contact information on a memory unit/module, e.g. a subscriber identity module (SIM) card, a universal SIM card, a universal integrated circuit card (UICC), embedded UICC (eUICC), embedded SIM (eSIM) and/or a memory module.

For example, storing the contact information 12 can be considered storing contact information 12 on an embedded SIM (eSIM) and/or on an embedded UICC (eUICC).

In some examples, the number of contacts stored on an eSIM, SIM, UICC and/or eUICC is limited, to enhance security by limiting entries.

In examples, storing the contact information 12 can comprise adding information of and/or associated with a new contact. In examples, a contact can be considered an electronic device 10 and/or a user of/associated with an electronic device 10.

In examples, storing the contact information 12 can comprise updating and/or amending contact information 12 that is stored.

In some examples, the electronic device 10a, for example a vehicle 24, has a link to one or more application servers and/or a remote trusted/secure environment through which the contact information 12 can be stored in relation to the electronic device 10a, for example a vehicle 24. This can be considered a remote admin panel.

For example, a master and/or superuser can directly set contact information 10a for the vehicle 24 via the remote admin panel, the contact information 10 associated with a second electronic device 10b.

Accordingly, in examples, storing the contact information 12 can comprise setting and/or storing the contact information 12 using and/or via one or more application servers and/or a remote trusted/secure environment, which can be considered the remote admin panel.

In examples, the master and/or superuser, can be a manufacturer of the vehicle 24, or a vehicle rental company and the master/superuser can set a subsequent owner of a vehicle using and/or via the remote admin panel.

In some examples, the master and/or superuser can subsequently update and/or reset and/or amend the contact information 12 using and/or via the remote admin panel. In some examples, the remote admin panel can be the electronic device 10a such as a mobile communication device.

In examples the contact information 12 can have any suitable form.

In some examples, the contact information 12 can be considered any suitable information to allow communication with an electronic device 10 associated with the contact information 12.

In some examples, the contact information 12 can be considered any suitable information to allow the electronic device 10a to contact and/or communicate with the second electronic device 10b associated with the contact information 12.

In examples, the contact information 12 can be considered any suitable information to allow one or more signals and/or one or more messages to be transmitted and/or routed to an electronic device 10.

The contact information/details 12 of the contact, e.g. the electronic device 10a and/or 10b, can comprise one or more of name information, identification (ID) information, vehicle identification number (VIN), address information, phone number, facsimile number, email address, Uniform Resource Locator (URL), QR code, Uniform Resource Identifier (UFI), image file, audio file, and/or location information.

The contact information 12 can comprise any suitable address and/or any suitable number and/or any suitable identifier and/or any suitable identity associated with an electronic device.

For example, the contact information 12 can comprise one or more telephone numbers and/or one or more email addresses and/or one or more profile identities, and/or one or more mobile station international subscriber directory numbers (MSISDN) and so on.

In examples, the contact information 12 can be received for storing at the electronic device 10 in any suitable way.

For example, the contact information 12 can be received and/or retrieved and/or input and so on.

In examples, the contact information 12 can be considered associated with an electronic device 10 because the contact information 12 enables and/or allows contact and/or communication with the electronic device 10.

In some examples, the contact information 12 can be considered associated with an electronic device 10 because the contact information 12 enables and/or allows one or more signals and/or one or messages to be transmitted to and/or routed to the electronic device 10.

In examples, the contact information 12 associated with an electronic device 10 can be considered contact information 12 of the electronic device 10 and/or contact information 12 of a user of the electronic device 10 and/or contact information 12 for the electronic device 10 and so on.

At block 204, the method 200 comprises transmitting, using the contact information 12, at least one binary message service message 14 comprising at least one identifier 16a associated with the electronic device 10 and/or information based, at least in part, on the at least one identifier 16a, wherein the at least one identifier 16a comprises at least one subscriber identity module (SIM) level identifier, at least one subscription level identifier, at least one user equipment (UE) level identifier and/or at least one device level identifier.

In some examples, transmitting, using the contact information 12, at least on binary message service message 14 can be performed in response to storing the contact information 12.

As FIG. 2 illustrates one or more actions of transmission, FIG. 2 also illustrates the corresponding receiving feature(s)/action(s) and vice versa.

For example, from the point of view of the second terminal node 110b/second electronic device 10b, block 204 can be considered to illustrate receiving the at least one binary message service message 14.

This is illustrated in the example of FIG. 2, by the arrow pointing from block 204 to the line representing the second terminal node 110b/second electronic device 10b.

In examples, transmitting the at least one binary message service message 14 can be performed in any suitable way using any suitable method.

In examples, transmitting the at least one binary message service message 14 is performed with or without user knowledge and/or user interaction with the electronic device 10a.

In some examples, transmitting using the contact information 12 can be considered transmitting to the second electronic device 10b associated with the contact information 12 and/or transmitting by means of and/or via the contact information 12 and so on.

In examples, transmitting in response to storing the contact information 12 can be considered transmitting based, at least in part, on storing the contact information 12 and/or transmitting in dependence on storing the contact information 12 and so on.

In some examples, transmitting in response to storing the contact information 12 can occur over any suitable time period.

In examples, storing the contact information 12 can be considered to trigger transmission of the at least one binary message service message 14. For example, a user can input the contact information 12 into the electronic device 10a and, in response to the storing of the contact information 12, the at least one binary message service message 14 is transmitted.

In some examples, at least one binary message service message 14 can be transmitted in relation to contact information 12 stored on the electronic device 10 at any suitable time in the past.

For example, block 204 can be performed for and/or in relation to contact information 12 stored for any suitable period of time. Accordingly, in examples, any suitable time period can occur between block 202 and block 204 of the method 200.

For example, block 204 can be performed for and/or in relation to the contact information 12 stored that can trigger a transmission of binary message service message 14 within a predefined time period and/or in a predefined location. In examples, the time period and location can be used to reduce potential abuse.

In examples, any suitable binary message service message(s) 14 can be used.

For example, any suitable message service that can be not accessible and/or not controllable and/or not usable by a user of the electronic device 10a can be used.

Accordingly, in examples, a user of the electronic device 10a is not aware and/or is oblivious to transmission of the at least one binary message service message 14.

For example, any suitable programmable and/or automatable binary message service can be used.

For example, any suitable rich message service allowing transmission of data, such as telephone system settings, wireless application push notifications and/or rich content can be used.

In examples, the at least one binary message service message 14 is and/or comprises at least one binary short message service (SMS) message and/or at least one protocol data unit (PDU). In some additional or alternative examples, the at least one binary message service message 14 is and/or comprises, at least in part, an XML-formatted textual message.

In examples, the at least one identifier 16a can be and/or comprise any suitable identifier 16a or identifiers 16a.

In examples, the at least one identifier 16a uniquely identifies the electronic device 10a as an end point for communication.

In examples, the at least one identifier 16a can be considered at least one endpoint identifier, and/or at least one hardware identifier, and/or at least one device identifier and so on.

In examples, the at least one identifier 16a can be considered at least one unique endpoint identifier, and/or at least one unique hardware identifier, and/or at least one unique device identifier and so on.

In examples, the at least one identifier can comprise any suitable identifier to uniquely identify the terminal node 110a/electronic device 10a in the network 100.

In examples the at least one identifier can be temporary and/or fixed.

In some examples, the at least one identifier can be considered at least one fingerprint.

In some examples, the at least one identifier is configured to identify the electronic device below the application layer. Accordingly, in examples, can be considered a generic and/or fundamental identifier of the electronic device 10a not specific to an application running on the electronic device 10a and/or not specific to a contact.

In examples, an identifier at a given level can be considered to be configured to identify at the given level. For example, a SIM level identifier can be considered to identify at the SIM level, a subscription level identifier can be considered to identify at the subscription level and so on.

In examples, the at least one identifier 16a can be considered to comprise at least one SIM identifier, at least one subscription identifier, at least one UE identifier and/or at least one device identifier.

In examples, the at least one identifier 16a can be considered to be associated with the electronic device 10a because the at least one identifier 16a is configured to identify one or more given entities of and/or linked with the electronic device 10a.

For example, a SIM level identifier associated with the electronic device 10a can be and/or comprise an identifier of a SIM card in the electronic device 10a, a subscription level identifier can be and/or comprise an identifier of a subscription linked to the electronic device 10a, a UE level identifier can be and/or comprise an identifier of a UE enabled at the electronic device, and device level identifier can be and/or comprise an identifier of and/or linked to one or more part of the electronic device 10a itself.

In examples, the at least one identifier can comprise International Mobile Subscriber Identity (IMSI) and/or International Mobile Equipment Identity (IMEI) and/or Mobile Station International Subscriber Directory Number (MSISDN) and so on.

In some examples, the at least one identifier can comprise a public key stored on a SIM/USIM/eSIM.

In examples, any suitable information based, at least in part, on the at least one identifier 16a can be used.

In some examples, information based, at least in part, on the at least one identifier 16a can be considered information derived, at least in part, from the at least one identifier 16a, and/or information determined, at least in part, using the at least one identifier and so on.

Accordingly, in examples, the at least one identifier 16a can be used, at least in part, to determine and/or derive information that is comprised in and/or transmitted with the at least one binary message service message 14.

For example, information based, at least in part, on the at least one identifier can comprise one or more public keys and/or any derivative or derivatives of IMSI and/or IMEI and/or MSISDN and/or any combination or derivative of IMSI and/or IMEI and/or MSISDN signed by a SIM private key, and so on.

In examples, any combination of the derivative of the IMSI and/or IMEI and/or MSISDN signed by the SIM private key, such as Ki, can be used as a public key.

At block 206, the method 200 comprises receiving at least one binary message service message 14 comprising at least one second identifier 16b associated with the second electronic device 10b and/or information based, at least in part, on the at least one second identifier 16b, wherein the at least one second identifier 16b comprises at least one subscriber identity module (SIM) level identifier, at least one subscription level identifier, at least one user equipment (UE) level identifier and/or at least one device level identifier or any combination thereof.

In some examples, at block 206 the method 200 can be considered to comprise receiving at least one second identifier 16b associated with the second electronic device 10b and/or information based, at least in part, on the at least one second identifier 16b, wherein the at least one second identifier 16b comprises at least one SIM level identifier, at least one subscription level identifier, at least one UE level identifier and/or at least one device level identifier.

In examples, one or more of the elements of the method 200 at block 206 can be as described in relation to block 204, but with regard to the second electronic device 10b and/or the at least one second identifier 16b.

For example, that at least one binary message service message 14 of block 206 can be as described in relation to the at least one binary message service message 14 of block 204.

For example, the at least one second identifier 16b can be, with regard to the second electronic device 10b, as described at block 204 in relation to the at least one identifier 16a, with regard to the electronic device 10a.

For example, information based, at least in part, on the at least one second identifier 16b can be, with regard to the at least one second identifier 16b, as described at block 204 in relation to the information based, at least in part, on the at least one identifier 16a, with regard to the at least one identifier 16a.

In examples, the at least one binary message service message 14 at block 206 is received/transmitted in response to the contact information 12 associated with the electronic device 10a being stored at and/or by the second electronic device 10b.

At block 208, the method 200 comprises determining at least one shared secret 18 based, at least in part, on the at least one identifier 16a and/or at least one second identifier 16b and/or the information based, at least in part, on the at least one identifier 16a and/or the at least one second identifier 16b.

In examples, at block 208 the method 200 can be considered to comprise determining, with the second electronic device 10b, at least one shared secret 18 based, at least in part, on the at least one identifier 16a and/or at least one second identifier 16b and/or the information based, at least in part, on the at least one identifier 16a and/or the at least one second identifier 16b.

Consequently, FIG. 2 illustrates a method 200 comprising:
storing contact information 12 associated with a second electronic device 10b;
transmitting, using the contact information 12, at least one binary message service message 14 comprising at least one identifier associated with the electronic device 10a and/or information based, at least in part, on the at least one identifier 16a, wherein the at least one identifier 16a comprises at least one subscriber identity module (SIM) level identifier, at least one subscription level identifier, at least one user equipment (UE) level identifier and/or at least one device level identifier;
receiving at least one binary message service message 14 comprising at least one second identifier 16b associated with the second electronic device 10b and/or information based, at least in part, on the at least one second identifier 16b, wherein the at least one second identifier 16b comprises at least one subscriber identity module (SIM) level identifier, at least one subscription level identifier, at least one user equipment (UE) level identifier, and/or at least one device level identifier; and
determining at least one shared secret 18 based, at least in part, on the at least one identifier 16a and/or the at least one second identifier 16b and/or the information based, at least in part, on the at least one identifier 16a and/or the at least one second identifier 16b.

As used herein, the term "determining" (and grammatical variants thereof) can include, not least: calculating, computing, processing, deriving, investigating, looking up (for example, looking up in a table, a database or another data structure), ascertaining and the like. Also, "determining" can include receiving (for example, receiving information), accessing (for example, accessing data in a memory) and the like. Also, "determining" can include resolving, selecting, choosing, establishing, and the like.

In examples, determining the at least one shared secret 18 can be performed in any suitable way using any suitable method.

For example, any suitable secure and formally vetted mutually authenticated key exchange mechanism can be used, such as elliptic curve Diffie-Hellman.

In some examples, any suitable combination of the identifier(s) 16a, second identifier(s) 16b, information based, at least in part, on the identifier(s) 16a and/or information based, at least in part, on the second identifier(s) 16b can be used in determining the at least one shared secret 18.

In examples, the at least one shared secret 18 can comprise any suitable shared secret(s) 18.

In examples, the at least one shared secret 18 comprises at least one shared secret 18 configured and/or suitable for securing and/or encrypting future correspondence using the contact information 12 and/or with the second electronic device 10b.

In some examples, the at least one shared secret 18 at the electronic device 10a and second electronic device 10b is derived based on a hash or HMAC-based key derivation function (HKDF).

In some examples, password-based key derivation function is used.

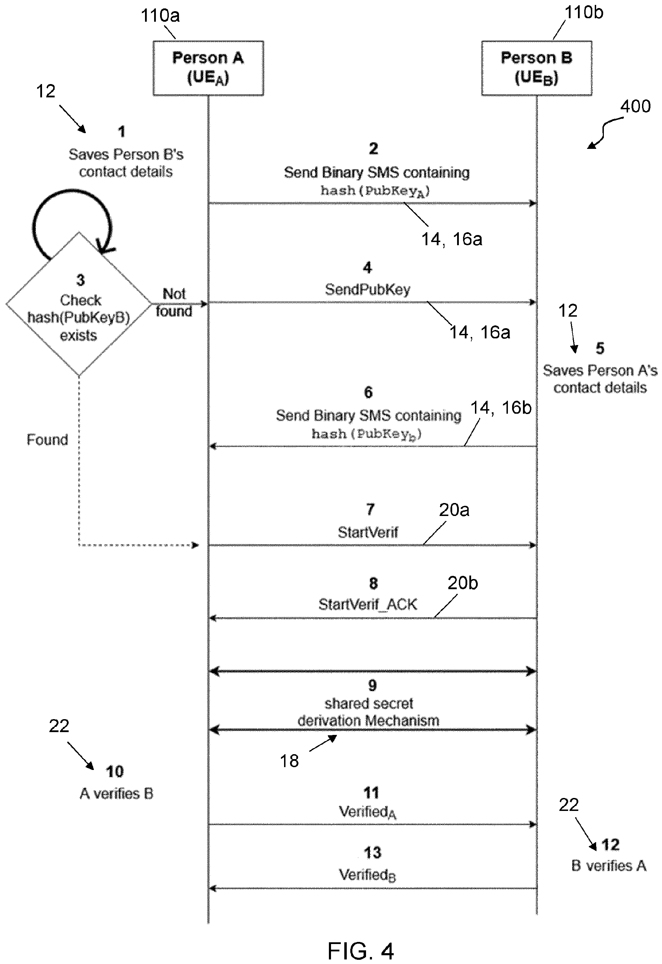

In some examples, the method 200 comprises determining, after the at least one binary message service message 14 has been transmitted, if the at least one second identifier 16b and/or information based, at least in part, on the at least one second identifier 16b has been received, and if it is determined that the at least one second identifier 16b and/or information based, at least in part, on the at least one second identifier has not been received, transmitting at least one further binary message service message using the contact information 12. See for example, FIG. 4.

Accordingly, in some examples, after block 204 it is determined if the at least one binary message service message 14 is received at block 206 and if not, transmitting at least one further binary message service message.

In some examples, the at least one further binary message service message can be the same or different to the binary message service message 14 transmitted at block 204.

Accordingly, in some examples, if it is determined that that at least one binary message service message 14 has not been received at block 206, the method 200 comprises retransmitting the binary message service message transmitted at block 204.

In some examples, determining, if the at least one second identifier 16b and/or information based, at least in part, on the at least one second identifier 16b has been received can be performed a plurality of times. In some examples, determining if the at least one second identifier 16b and/or information based, at least in part, on the at least one second identifier 16b has been received can be performed at regular/periodic intervals and/or at increasing intervals.

In some examples, if it is determined that the at least one second identifier 16b and/or information based, at least in part, on the at least one second identifier 16b has been received and/or that the at least one binary message service message 14, at block 206, has been received, the method 200 proceeds, for example, to block 208.

In some examples, the method 200 comprises transmitting at least one first acknowledgement 20a to the second electronic device 10b, and receiving at least one second acknowledgement 20b from the second electronic device 10b, wherein the at least one first acknowledgement 20a and at least one second acknowledgement 20b comprise information for confirming that determination of at least one shared secret 18 can occur.

In some examples, the at least one first acknowledgement 20a and/or the at least one second acknowledgement 20b can be transmitted/received in any suitable way using any suitable method.

In some examples, the at least one first acknowledgement 20a and/or that at least one second acknowledgement 20b can be transmitted/received via one or more signals and/or one or more messages.

In some examples, the at least one first acknowledgement 20a and/or the at least one second acknowledgement 20b can comprise any suitable information to confirm that determination of at least one shared secret can occur and/or proceed.

For example, the at least one first acknowledgement 20a can comprise any suitable information to inform the second electronic device 10b that at least one second identifier 16b and/or information based, at least in part, on the at least one second identifier 16b has been received at the electronic device 10a.

For example, the at least one second acknowledgement 20b can comprise any suitable information to inform the electronic device 10a that at least one identifier 16a and/or information based, at least in part, on the at least one identifier 16a has been received at the second electronic device 10b.

In some examples, the at least one first acknowledgement 20a and/or the at least one second acknowledgement 20b comprises hash of the content received in 16a and 16b. In some examples, such an acknowledgement provides proof that the entity providing the acknowledgement has the components to start the shared secret derivation and is the intended recipient.

In some examples, the method 200 comprises outputting, to a user of the electronic device 10a, confirmation information of the at least one shared secret 18 to confirm validity of the at least one shared secret 18, and determining if the user of the electronic device 10a confirms validity of the at least one shared secret 18. See, for example, FIG. 4.

In some examples, the confirmation information can have any suitable form and can be outputted to the user in any suitable way.

For example, the confirmation information can have any suitable form to allow a user of the electronic device 10a and a user of the second electronic device to confirm validity of the at least one shared secret 18.

In some examples, at least a portion of the at least one shared secret 18 and/or information derived from and/or determined from and/or based, at least in part, on the at least one shared secret 18 is output to the users to allow the users to confirm validity of the at least one shared secret 18.

In some examples, the confirmation information is output to the users to allow the users to confirm that the output confirmation information matches, to confirm validity of the at least one shared secret 18.

Accordingly, in some examples, the confirmation information comprises at least part of the at least one shared secret 18.

In some examples, the confirmation information comprises a numeric encoding of a hash of at least part of the information transmitted/received at blocks 204 and 206.

The confirmation information can be output to a user of the electronic device 10a in any suitable way, using any suitable method.

For example, the confirmation information can be output via a display of and/or associated with the electronic device 10a.

In some examples, determining if the user of the electronic device 10a confirms validity of the at least one shared secret 18 can be performed in any suitable way, using any suitable method.

For examples, the user of the electronic device 10a can make one or more inputs to confirm, or not confirm, validity of the at least one shared secret 18.

When the validity of the at least one shared secret 18 has been confirmed, the at least one shared secret 18 can be used to secure and/or encrypt subsequent communications using the contact information 12.

Accordingly, in examples, the method 200 comprises establishing subsequent communication using the stored contact information 12 using at least one of the at least one shared secret 18.

Any suitable form of communication can be used. For example, one or more telephone calls, one or more messages, one or more video calls and so on.

As the at least one shared secret 18 has been determined based, at least in part, on the at least one identifiers 16a, 16b and/or the information based, at least in part, on the at least one identifiers 16a, 16b, it can be used by any application running on the electronic device 10a.

In some examples, if the validity of the at least one shared secret 18 is not confirmed, the at least one shared secret 18 is determined to be invalid and will not be used.

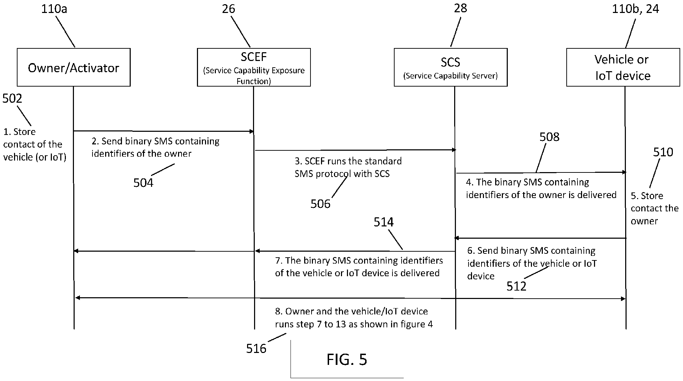

In some examples, subsequent communication between the electronic device 10a and the second electronic device 10b using at least one of the at least one shared secret 18 can be used to control access, by the user, to the electronic device 10a. For example, in some examples where the electronic device is and/or comprises a vehicle 24. See, for example, FIG. 5.

In some examples, subsequent communication between the electronic device 10a and the second electronic device 10b can be used to issue one or more commands and/or instructions and/or control signals to the electronic device 10a and/or the second electronic device 10b.

In some examples, any suitable commands can be used. For example, activate, deactivate and/or update owner commands can be used.

In some examples, one or more commands can be transmitted between the electronic device 10a and the second electronic device 10b in any suitable way.

In some examples, one or more commands can be transmitted using one or more binary message service messages, for example one or more binary SMS.

In some examples, subsequent communication between the electronic device 10a and the second electronic device 10b using at least one of the at least one shared secret 18 can be used to allow the user of the electronic device 10a to access the electronic device 10a, which can be a vehicle 24.

In some examples, at least one message can be transmitted from the second electronic device 10b to the electronic device 10a using at least one of the at least one determined shared secret 18 to allow the user of the electronic device 10a to access the electronic device 10a. Such as message can be considered an activation message.

Accordingly, in some examples, the method 200 comprises receiving at least one activation message from the second electronic device 10b, determining if the at least one activation message has been sent using at least one of the at least one shared secret 18, and if it is determined that the at least one activation message has been sent using at least one of the at least one shared secret 18, activating the electronic device 10a to allow access to the electronic device 10a.

For example, an activation message can be received by the electronic device 10a in the form of a vehicle 24 to allow a user to access and/or use the vehicle 24 at least temporarily. See, for example, FIG. 5.

In some examples, an activation message can be considered a message comprising an activate command/instruction/control signal.

In some examples, the method 200 comprises deleting the contact information 12 and in response to deleting the contact information 12, deleting at least one of the at least one shared secret 18.

In some examples, deleting the contact information 12 can be considered removing the stored contact information 12 so that the contact information 12 cannot be retrieved and/or used.

With reference to the example of FIG. 2, in some examples the stored contact information 12 is removed from the electronic device 10a and the at least one shared secret 18 deleted. Accordingly, subsequent transmissions cannot be secured and/or encrypted using the at least one shared secret.

In some examples, at least a portion of the at least identifier associated with an electronic device and/or information based, at least in part, on the at least one identifier associated with an electronic device can be removed.

In examples, deleting and/or removing the contact information 12 and/or at least one shared secret 18 can be considered deactivation of the associated electronic device 10.

In some examples, deleting the contact information 12 can be performed in response to fulfilment of any suitable condition or conditions.

In some examples, the contact information 12 is deleted in response to input, for example user input.

In some examples, the contact information 12 is deleted in response to input and/or user input remotely received.

For example, in response to receiving a deactivate command/instruction/control signal, from the second electronic device 10b the electronic device 10a and/or second electronic device 10b deletes the contact information associated with the second electronic device 10b. In some examples, the deactivate command can include any suitable indication of the contact information to be deleted.

In some examples, the contact information 12 is deleted upon expiry of a timer. For example, in examples where the electronic device is a rented vehicle, upon expiry of the agreed rental term the vehicle 24 can delete/deactivate the contact information associated with the owner associated with the expired rental period to prevent the owner from using/accessing the vehicle beyond the terms of the agreed rental agreement.

In some examples, the contact information 12 is deleted if the location of the electronic device 10 is outside of a defined location.

In some examples, wherein ownership of the electronic device 10a, is changing a change owner command/instruction/control signal can be used.

For example, an owner of a vehicle 24 can transmit an update owner command/instruction/control signal to the vehicle 24 comprising an indication of contact information of a new user, using the determined at least one shared secret.

In response, the vehicle 24 can automatically deactivate the current owner and determine at least one shared secret with an electronic device 10 of the new owner.

In some examples, the method 200 comprises in response to deleting the contact information 12, transmitting at least one message to the second electronic device 10b to confirm deletion of the contact information 12.

In some examples, the at least one message can have any suitable form to confirm deletion of the contact information 12.

In some examples, in response to receiving the at least one message, the contact information 12 associated with the electronic device 10a is deleted at the second electronic device 10b.

In some examples, the second electronic device 10b can be considered to be the electronic device 10a and the electronic device 10a can be considered to be the second electronic device 10b.

Examples of the disclosure provide technical benefits. For example, examples of the disclosure provide for determination of at least one shared secret between an electronic device and a second electronic device that is not specific to an application or a contact of an application.

Examples provide for use of binary message service messages which are not visible from the user interface unless specified which allows for intrinsic parts of the inventive method to remain invisible to the end user. Additionally, or alternatively, it is not generally possible for a user to send a binary message service message providing further security.

Examples provide for taking advantage of existing cryptographic primitives, for example from SIM/eSIM/eUICC cards.

Examples provide for the method to be used with any suitable electronic devices such as, for example, vehicles.

Examples allow for tampering attacks, such as man in the middle and identity spoofing, to be detected from the end-user's side.

Examples allow for the inventive method to be implemented without infrastructural overhead.

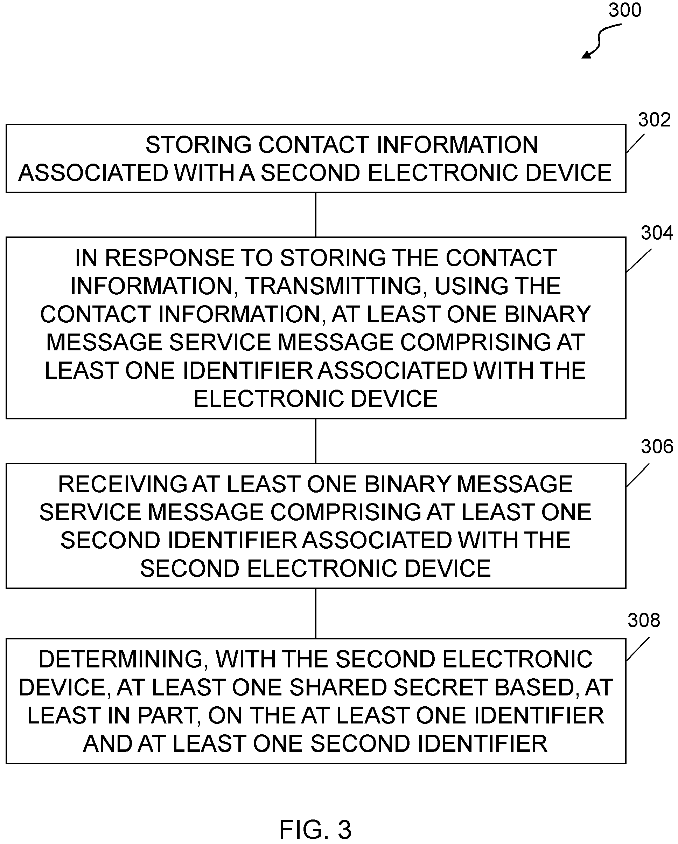

FIG. 3 illustrates an example of a method 300.

In examples, the method 300 can be performed by any suitable apparatus comprising any suitable means for performing the method 300.

In some examples, the method 300 can be performed by a terminal node 110, such as an electronic device 10a.

At block 302, the method 300 comprises storing contact information 12 associated with a second electronic device 10b.

At block 304, the method 300 comprises transmitting, using the contact information 12, at least one binary message service message 14 comprising at least one identifier 16a associated with the electronic device 10a and/or information based, at least in part, on the at least one identifier 16a, wherein the at least one identifier 16a comprises at least one subscriber identity module (SIM) level identifier, at least one subscription level identifier, at least one user equipment (UE) level identifier and/or at least one device level identifier.

At block 306, the method 300 comprises receiving at least one binary message service message comprising at least one second identifier 16b associated with the second electronic device 10b and/or information based, at least in part, on the at least one second identifier 16b, wherein the at least one second identifier 16b comprises at least one subscriber identity module (SIM) level identifier, at least one subscription level identifier, at least one user equipment (UE) level identifier and/or at least one device level identifier.

At block 308, the method 300 comprises determining at least one shared secret 18 based, at least in part, on the at least one identifier 16a and/or at least one second identifier 16b and/or information based, at least in part, on the at least one identifier 16a and/or at least one second identifier 16b.

Consequently, FIG. 3 illustrates a method 300 comprising:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or at least one second identifier and/or the information based, at least in part, on the at least one identifier and/or at least one second identifier.

FIG. 4 illustrates an example of a method 400.

In some examples, FIG. 4 can be considered to illustrate a plurality of methods. For example, FIG. 4 illustrates one or more actions at a plurality of actors/entities. In some examples, FIG. 4 can be considered to illustrate a plurality of methods performed by the individual actors/entities.

In the example of FIG. 4, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 4 form at least a portion of a network 100 as described in relation to FIG. 1.

In the illustrated example, two terminal nodes 110a, 110b in the form of two UEs UE_{A}, UE_{B}, transmit and/or receive one or more signals and/or one or more messages.

In some examples, communications and/or transmissions between elements illustrated in FIG. 4 can proceed via any number of intervening elements, including no intervening elements.

In the illustrated example, UE_{A} is owned and/or used by person A and UE_{B} is owned and/or used by person B. Accordingly, in examples, the UE_{A} can be considered to be associated with person A, and vice versa, and the UE_{B} can be considered to be associated with person B.

In some examples, mobile end-users save contacts, for example, phone number/MSISDN, in two occasions:
- Occasion 1: Person A meets Person B (in person or virtually) and exchanges their contact details. Both A and B save the contact details immediately almost at the same time.
- Occasion 2: Person A saves the contact of Person B first. Person B saves the contact after he receives communication (e.g., in the form of text or call) from Person A.

FIG. 4 illustrates an example of a message sequence. The example of FIG. 4 can be considered to take place in three phases.

Phase 1: In some examples, phase 1 can be considered to illustrate triggering of the verification mechanism. In some examples, blocks 1, 2, 5, and 6 can be considered to form phase 1.

In some examples, when Person A saves Person B's contact on her phone, at block 1, a binary SMS containing A's public key hash is sent to Person B, at block 2. Similar triggering happens on Person B's side, at block 6, when they save A's contact, at block 5, but the binary SMS contains B's public keys.

In some examples, the triggering occurs independently of the other party and end results are same in both occasion 1 and 2. However, in examples, step 2 occurs when both parties save each other's contacts.

This means, in examples of occasion 1 both parties will move towards step 2 immediately, whereas in examples of occasion 2 there will be a delay until Person B saves the contact details of Person A.

In some examples, since the triggering of the binary SMS is attached to the natural user event of saving a contact and no extra effort is needed from the end-users. This is advantageous as, for example, it provides for making the mechanism oblivious to the end-users.

In some examples, the public keys can be obtained from the (e)SIM/UICC card, for example using the same public keys used in radio channels or deriving of separate ones for this purpose from the cryptographic primitives in the cards.

Phase 2: In some examples, phase 2 can be considered to illustrate initiation of verification mechanism. In some examples, blocks 3 and 4 can be considered to form phase 2.

In some examples, before establishing communication with a contact (for examples, for regular text SMS or Calls), Person A's SIM checks, at block 3, if there are any binary SMS associated with Person B.

In some examples, if that exists, it is tried to send another binary SMS to person B stating to check the same its end, at block 7. If Person B has also saved Person A's contact, the method 400 proceeds.

Otherwise, in examples, block 2 is repeated, at block 4, in frequent and discrete intervals (for example, every day for the first ten days, and then once a week until next few months). If there is an acknowledgement that both have moved to the next phase, phase 2 would not take place.

Phase 3: In some examples, phase 3 can be considered to illustrate mutual verification. In some examples, blocks 7 to 13 can be considered to form the phase 3.

In some examples, once both parties have saved each other's contacts and they have shared acknowledgements about the same, at blocks 7 and 8, numeric encoding the hash of public keys shared in phase 1 appears on the user interface for Person A and B to confirm.

In some examples, this happens once per user. In some examples, there is no need for real time confirmation from both parties.

Any secure and formally vetted mutually authenticated key exchange mechanisms (for example, Elliptic Curve Diffie- Hellman) can be used.

All the aforementioned can take place almost/substantially in real time if the parties encounter occasion 1. There will be a delay in occasion 2; however, binary SMS are partial completion of the protocols are not visible to the users. In examples, only phase that requires interaction from the users in phase 3.

In some examples, to verify all previously saved contacts, the above blocks happen between contacts saved on the phone for the first time.

There onwards, they occur when a new contact is saved or an existing contact or a portion of contact information of the existing contact is updated. In some examples, SMS or calls made without saving the numbers are not counted towards verification. This helps in omitting trivial contacts that are not usually saved such as interaction with temporary contacts and customer cares.

In some examples, the above-mentioned protocol and/or method can be considered, for example, as an extension of eSIM protocol family.

Although the example of FIG. 4 illustrates how two humans, as communication endpoints, can verify each other, the method itself is agnostic to who the endpoints are and it can be used to verify non-human entities as well.

This is because it is an extensible method to verify two entities, by automating and exchanging secrets, over binary SMS.

In some examples, the verification is hidden from the entities involved.

In some examples, one or more methods described herein can be used in internet of things (loT) or Mobility-as-a-Service (Mass) domains between two devices/apparatuses.

FIG. 5 shows an example of remote verification of a vehicle 24, or any other device terminal node 110 / electronic device 10, for example, an loT device, in a similar manner.

Some examples relate to car ownership. For example, FIG. 5 illustrates an example of a method 500 in remote verification and activation of a vehicle 24 in MaaS.

In some examples the method 500 relates to the method steps of the method 200 and/or the method 400, e.g. includes one or more similar blocks/steps. However, in the example of FIG. 5 one of the entities in the MaaS is the vehicle 24 itself.

In the example of FIG. 5, the method 500 includes the involvement of the Service Capability Server (SCS) 28 and Service Capability Exposure Function (SCEF) 26 exposing APIs to application servers, for example. Other nodes can be involved too.

Fig. 5 highlights the main differences in non-human entity verification.

In some examples, the vehicle 24 gets a SIM, eSIM or eUICC, installed when manufactured; and then the vehicle 24 is sold to its owner.

At block 502, the owner, which can be considered a seller and/or buyer and/or renter and/or user of the vehicle 24, gets the contact information/details, for example a phone number, of the vehicle 24, that is stored in the memory unit, such as installed SIM, eSIM and/or eUICC, after he/she buys/rents it and saves it on his/her terminal node 110a / electronic device 10a / admin panel, such as a phone, or a server with owner's access.

At block 504, at least one binary message service message ,e.g. binary SMS, from the owner's end, e.g. from the terminal node 110a / electronic device 10a / admin panel, is sent towards/to the vehicle 24 based on the contact information/details. The binary message service message comprises the contact information/details of the owner.

Further, the binary message service messages can comprise a request for recoding and reporting the location of the vehicle 24. Further, the binary message service messages can comprise a hash of a public key (PubKey) of the owner. The sending can be triggered automatically after the block 502, or by owner's command.

This is where components like the SCS 28 and/or the SCEF 26 come into play, at blocks 506 and 508, alongside existing network nodes such as a HSS (Home Subscriber Server) and an MME (Mobile Management Entity) in traditional SMS delivery. In 5G, nodes can comprise an NEF, for example.

At the block 506, the SCEF 26 further executes a binary message service messages protocol to deliver the binary message service messages received at the step 504, and to enquire the SCS 28 for reporting of location information the vehicle 24 to be registered.

At the block 506, the SCEF 26 runs a binary message service message protocol, for example, a standard SMS protocol with the SCS, to deliver the message received at the step 504. Further, the block 506 can comprise a request for the SCS 28 for recording and reporting of the location information the vehicle 24.

The binary message service message, e.g. the binary SMS is executed by a related standard message delivery protocol, such as a SMS delivery protocol, that comprises querying, management and/or and delivery of the location information of the vehicle.

The location information of the vehicle can be additionally and/or alternatively used to act as a soft authentication for the owner who is nearby.

At the block 508, the binary message service message received at the block 506 is further sent to the second terminal node 110b / second electronic device 10b, such as the vehicle 24.

At block 510, the vehicle 24 gets the contact information/details of the owner and/or the seller and/or buyer and/or renter of the vehicle 24, and the contact information/details is saved in one or more memory units of the vehicle 24, such as the installed SIM, eSIM and/or eUICC. This can be done automatically after the binary message service messages received, or manually, for example, from a vehicle admin panel of the vehicle 24, in a server (via a remote admin panel) connected to the vehicle 24, or any access method/device that the seller controls.

At block 512, this triggers automatic or manual sending of a binary message service message, comprising a public key (PubKey) of the vehicle 24, from the vehicle 24 to the owner 110a/10a, which is delivered via the SCS 28 and SCEF 26 at block 514.

At block 512, at least one binary message service message ,e.g. binary SMS, from the vehicle 24 based on the received contact information/details of the owner is sent via the SCS 28 and SCEF 26 at block 514.The binary message service message comprises the contact information/details of the vehicle 24. Further, the binary message service messages can comprise a hash of a public key (PubKey) of the vehicle 24. The sending can be triggered automatically after the block 510, or by owner's command.

As indicated at block 516, the method 500 can further comprise similar/same blocks 7 to 13 as described in relation to FIG. 4.

The location information of the vehicle 24, that can be sought as part of standard SMS protocol (see e.g. the block 506) can be used in the block 516 for more accurately locating the vehicle that is taking part in the verification protocol and/or to use the location as additional confirmation of the vehicle that is being verified.

In some examples, this is invisible to the owner although the SMS is delivered to the owner's mobile device or in a server accessible by owner or the personal of seller, for example.

When the car is sold, the contact information of the seller and the vehicle 24 are exchanged.

This is advantageous as it ensures the user doesn't interrupt the mutual automated peer-to-peer key exchange or verification, and makes it oblivious to the users.

Now both parties have public keys or some sort of shared secrets.

In the example of FIG. 5, the vehicle 24 and phone 110a/10a, or any suitable user communication device, of the owner have verified each other, e.g. based on the shared common secret. In examples, all these happen remotely.

In some examples, when the car owner, gets the vehicle 24 delivered to his house, the shared secret can be used again to activate access.

In some examples, it need not happen over binary SMS like before. Instead, in some examples, it can happen over a short-range wireless radio connection, for example NFC (Near Field Communication), WLAN or Bluetooth^{®} connection.

In examples, advantages of the addendum of the binary SMS are:
- It can happen remotely
- It adds an additional layer of security
- It serves as activation or pre-authentication of the car key from the time it is car order is placed to the car is delivered to the doorstep.
- It helps to have this channel as an out-of-band because if the car key is lost, the whole protocol can be run again. Keys can't be forged either without the approval of the seller/manufacturer.
- It can serve as activation or pre-authentication of the vehicle from the time when the ownership of the vehicle is transferred to a new owner.
- It can serve as activation or pre-authentication of the vehicle from the time when the usage right of the vehicle is transferred from a current user to a new user.

In some examples, another application is in car rental services. In case of car rentals, car owners will be car renters who can be treated as temporary owners. It also means the owner is changed or updated and an activation/ and deactivation along with verification is done.

In some examples, activation can be considered a procedure as follows:
After block 13 (see, for example, FIG. 4), the vehicle 24 sends "Initiate Activation" message to the car service entity on the other side of the communication.

In some examples, the car service side reverts back with "Activated" if it has the verified contact of the car that is requesting.

In examples, this procedure takes place when the car is activated.

In some examples, deactivation can be considered a procedure as follows:
First action of deleting keys, or access or usage rights, on the car service side is as simple as deleting the car from contact.

In some examples, this sends a "Deactivating" message to the car along with its signature. In some examples, the car will verify it and respond with "Deactivation accepted" to confirm the process, also by signing from its end.

This confirms the deactivation is bound by the previously established mutual secrets and initiated by benign entities.

In some examples, the car service side adds the car's contact again, the protocol is reinitiated and keys are exchanged once again.

In some examples, the deactivation is performed in relation and/or upon a change of ownership of the vehicle 24. For example, upon the vehicle 24 is sold to a new owner.

In some examples, the ownership of the vehicle 24 can be considered to pass/return to a master, for example the vehicle manufacturer, upon deactivation if, for example, a new owner is not assigned.

In some examples, the communication overhead caused by retransmission of keys repeatedly is negligible. However, it can be reduced if two set of keys are derived/exchanged for the very first time a car is activated - one permanent and one temporary. In some examples, the permanent key is associated with a master, for example the vehicle manufacturer, and the temporary key is associated with the owner of the vehicle 24.

In such examples, the deactivation deletes the temporary key and new communication include temporary keys encrypted with permanent keys. This ensures one key to permanently reside on both sides and use temporary keys for subsequent updates of ownerships.

Examples of the disclosure are advantageous. For example, examples of the disclosure provide for efficient, hidden verification of entities to allow for secure communication.

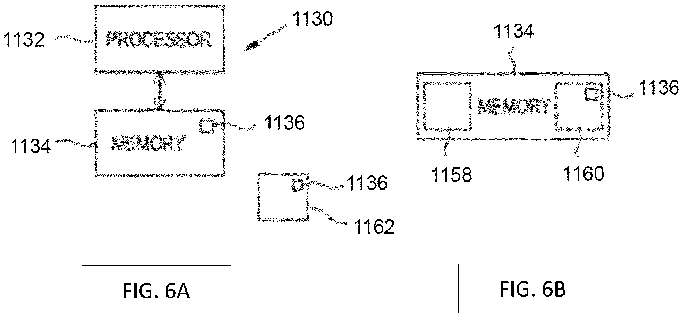

Fig 6A illustrates an example of a controller 1130. The controller 1130 can be used in an apparatus such as a terminal node 110 such as an electronic device, for example a mobile communication device or a vehicle. In some examples, controller 1130 can be considered an apparatus 1130. In some examples, one or more controllers 113-can be installed in a vehicle.

Implementation of the controller 1130 may be as controller circuitry. The controller 1130 may be implemented in hardware alone, have certain aspects in software including firmware alone or can be a combination of hardware and software (including firmware).

As illustrated in Fig 6A the controller 1130 may be implemented using instructions that enable hardware functionality, for example, by using executable instructions of one or more computer programs 1136 in one or more general-purpose or special-purpose processor 1132 that may be stored on one or more computer readable storage mediums (disk, memory etc.) to be executed by one or more processors 1132.

The processor 1132 is configured to read from and write to the memory 1134. The processor 1132 may also comprise an output interface via which data and/or commands are output by the processor 1132 and an input interface via which data and/or commands are input to the processor 1132.

The memory 1134 stores a computer program 1136 comprising computer program instructions (computer program code) that controls the operation of the apparatus when loaded into the processor 1132. The computer program instructions, of the computer program 1136, provide the logic and routines that enables the apparatus to perform the methods illustrated in Figs 2 and/or 3 and/or 4 and/or 5. The processor 1132 by reading the memory 1134 is able to load and execute the computer program 1136.

The apparatus therefore comprises:
at least one processor 1132; and
at least one memory 1134 including computer program code
the at least one memory 1134 and the computer program code configured to, with the at least one processor 1132, cause the apparatus at least to perform:
   storing contact information associated with a second electronic device;
   transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
   receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
   determining at least one shared secret based, at least in part, on the at least one identifier and/or at least one second identifier and/or the information based, at least in part, on the at least one identifier and/or at least one second identifier.

As illustrated in Fig 6A, the computer program 1136 may arrive at the apparatus via any suitable delivery mechanism 1162. The delivery mechanism 1162 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1136. The delivery mechanism may be a signal configured to reliably transfer the computer program 1136. The apparatus may propagate or transmit the computer program 1136 as a computer data signal.

Computer program instructions for causing an apparatus to perform at least the following or for performing at least the following:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or at least one second identifier and/or the information based, at least in part, on the at least one identifier and/or at least one second identifier.

The computer program instructions may be comprised in a computer program, a non-transitory computer readable medium, a computer program product, a machine-readable medium. In some but not necessarily all examples, the computer program instructions may be distributed over more than one computer program.

Although the memory 1134 is illustrated as a single component/circuitry it may be implemented as one or more separate components/circuitry some or all of which may be integrated/removable and/or may provide permanent/semi-permanent/ dynamic/cached storage.

In some examples the memory 1134 comprises a random-access memory 1158 and a read only memory 1160. In examples the computer program 1136 can be stored in the read only memory 1160. See, for example, Fig. 6B

In some examples the memory 1134 can be split into random-access memory 1158 and read only memory 1160.

Although the processor 1132 is illustrated as a single component/circuitry it may be implemented as one or more separate components/circuitry some or all of which may be integrated/removable. The processor 1132 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 2 and/or 3 and/or 4 and/or 5 may represent steps in a method and/or sections of code in the computer program 1136. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus can, in examples, comprise means for:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or at least one second identifier and/or the information based, at least in part, on the at least one identifier and/or at least one second identifier.

In some examples, an apparatus can comprise means for performing one or more methods, and/or at least part of one or more methods, as disclosed herein.

In some examples, an apparatus can be configured to perform one or more methods, and/or at least part of one or more methods, as disclosed herein.

The recording of data may comprise temporary recording, or it may comprise permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An electronic device comprising means for:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or the at least one second identifier and/or the information based, at least in part, on the at least one identifier and/or the at least one second identifier.

2. An electronic device of claim 1, wherein the means are configured to perform:
determining, after the at least one binary message service message has been transmitted, if the at least one second identifier and/or information based, at least in part, on the at least one second identifier has been received; and
if it is determined that the at least one second identifier and/or information based, at least in part, on the at least one second identifier has not been received, transmitting at least one further binary message service message using the contact information.

3. An electronic device of claim 1 or 2, wherein the means are configured to perform:
transmitting at least one first acknowledgement to the second electronic device; and
receiving at least one second acknowledgement from the second electronic device, wherein the at least one first acknowledgement and at least one second acknowledgement comprise information for confirming that determination of at least one shared secret can occur.

4. An electronic device of any preceding claim, wherein the means are configured to perform:
outputting, to a user of the electronic device, confirmation information of the at least one shared secret to confirm validity of the at least one shared secret; and
determining if the user of the electronic device confirms validity of the at least one shared secret.

5. An electronic device as of claim 4, wherein the confirmation comprises at least part of the at least one shared secret.

6. An electronic device of any preceding claim, wherein the means are configured to perform:
establishing subsequent communication using the stored contact information using at least one of the at least one shared secret.

7. An electronic device of any preceding claim, wherein the electronic device and/or the second electronic device comprises a vehicle.

8. An electronic device of any preceding claim, wherein the means are configured to perform:
receiving at least one activation message from the second electronic device;
determining if the at least one activation message has been sent using at least one of the at least one shared secret; and
if it is determined that the at least one activation message has been sent using at least one of the at least one shared secret, activating the electronic device to allow access to the electronic device.

9. An electronic device of any preceding claim, wherein the means are configured to perform:
deleting the contact information; and
in response to deleting the contact information, deleting at least one of the at least one shared secret.

10. An electronic device of claim 9, wherein the means are configured to perform:
in response to deleting the contact information, transmitting at least one message to the second electronic device to confirm deletion of the contact information.

11. The electronic device of any preceding claim, wherein the means comprises at least one processor; and
at least one memory including computer program code, the at least one memory and computer program code configured to, with the at least one processor, cause the performance of the apparatus.

12. A method comprising:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or the at least one second identifier and/or the information based, at least in part, on the at least one identifier and/or the at least one second identifier.

13. A method of claim 12, the method comprising:
establishing subsequent communication using the stored contact information using at least one of the at least one shared secret.

14. A method of claim 12 or 13, wherein the electronic device and/or the second electronic device comprises a vehicle.

15. A computer program comprising instructions for causing an electronic device to perform at least the following:
storing contact information associated with a second electronic device;
transmitting, using the contact information, at least one binary message service message comprising at least one identifier associated with the electronic device and/or information based, at least in part, on the at least one identifier, wherein the at least one identifier comprises at least one subscriber identity module, SIM, level identifier, at least one subscription level identifier, at least one user equipment, UE, level identifier and/or at least one device level identifier;
receiving at least one binary message service message comprising at least one second identifier associated with the second electronic device and/or information based, at least in part, on the at least one second identifier, wherein the at least one second identifier comprises at least one subscriber identity module, SIM, level identifier, at least one subscription level identifier, at least one user equipment, UE, level identifier and/or at least one device level identifier;
determining at least one shared secret based, at least in part, on the at least one identifier and/or the at least one second identifier and/or the information based, at least in part, on the at least one identifier and/or the at least one second identifier.
